# EUROPÄISCHE PATENTSCHRIFT

(11) **EP 4 277 803 B1**
(45) Veröffentlichungstag und Bekanntmachung des Hinweises auf die Patenterteilung: **25.06.2025**
(21) Anmeldenummer: 22708788.9
(22) Anmeldetag: 04.02.2022
(51) Int. Cl.: B60L 7/02, B61C 17/04, H01C 1/028, H01C 1/032, H01C 1/08

(54) **MEHRLAGIGE BREMSWIDERSTANDVORRICHTUNG FÜR EIN FAHRZEUG**
MULTILAYER BRAKING RESISTOR DEVICE FOR A VEHICLE
DISPOSITIF DE RÉSISTANCE DE FREINAGE POUR UN VÉHICULE

(30) Priorität: 04.03.2021 DE 102021202091
(43) Veröffentlichungstag der Anmeldung: 22.11.2023
(73) Patentinhaber: Siemens Mobility GmbH, 81739 München (DE)
(72) Erfinder: BLISSE, Johannes, 91080 Spardorf (DE); DORNBERGER, Peter, 90489 Nürnberg (DE); RÜTER, Arnd, 47802 Krefeld (DE); QUINDT, Jürgen, 90552 Röthenbach an der Pegnitz (DE); STÜTZLE, Thorsten, 91058 Erlangen (DE)
(74) Vertreter: Siemens Patent Attorneys
(86) Internationale Anmeldenummer: PCT/EP2022/052676
(87) Internationale Veröffentlichungsnummer: WO 2022/184376

(56) Entgegenhaltungen:
- EP-A2- 0 041 470
- DE-A1- 102015 203 689
- DE-A1- 102017 217 228
- DE-B3- 102017 207 274
- KR-U- 20110 003 626
- US-A- 3 624 581

## Beschreibung

Die Erfindung betrifft eine Bremswiderstandvorrichtung für ein Fahrzeug, ein Fahrzeug mit einer solchen Bremswiderstandvorrichtung sowie ein Verfahren zum Betrieb der Bremswiderstandvorrichtung.

Bremswiderstände werden in Fahrzeugen dazu eingesetzt, eine in einem Bremsvorgang des Fahrzeugs rekuperierte elektrische Energie in eine thermische Energie umzuwandeln. Eine maximale Bremsleistung ist demnach durch die Bremswiderstände limitiert. Hierbei ist es erforderlich, die in einem Bremsvorgang entstehende thermische Energie von den Bremswiderständen abzutransportieren. Ein Abtransport dieser thermischen Energie kann sowohl aktiv als auch passiv erfolgen. Im Falle einer aktiven Kühlung der Bremswiderstände sind weitere Bauteile, wie beispielsweise ein Lüfter oder weitere Wärmetauscher erforderlich, welche zu einer Verringerung der Energieeffizienz einer Bremsanlage mit Bremswiderständen führen. Daher werden passiv gekühlte, also beispielsweise durch einen Fahrtwind gekühlte, Bremswiderstände bevorzugt. Aus dem Dokument WO 2020/083620 A1 geht eine Bremswiderstandvorrichtung hervor, welche durch einen Fahrtwind gekühlt wird. Diese Bremswiderstandvorrichtung weist mehrere in einer Ebene parallel zueinander angeordnete Bremswiderstandelemente auf. Diese einlagige Anordnung der Bremswiderstandelemente zeichnet sich durch eine geringe Bauhöhe aus. Jedoch ist im Falle der einlagigen Anordnung der Bremswiderstandelemente eine Bremsleistung der Bremswiderstandelemente linear proportional zu einer für die Anordnung der Bremswiderstandelemente erforderliche Grundfläche. Hieraus folgt ein großer Grundflächenbedarf der Bremswiderstandelemente für die Bereitstellung einer großen Bremsleistung.

Aus dem Dokument US 3 624 581 A ist ein elektrischer Widerstand, insbesondere für ein dynamisches Bremssystem einer Lokomotive, mit einer Mehrzahl in einem Gehäuse angeordneten und forciert belüfteten länglichen Widerstandelementen bekannt. Aus dem Dokument KR 2011 0003626 U ist ein Bremswiderstand mit einem Gehäuse aus einem Aluminium-Material einer Isolierung sowie elektrischen Anschlüssen bekannt. Aus der DE 10 2017 207274 B3 ist ein Fahrzeug mit einer elektrodynamischen Bremseinrichtung mit zumindest einem Bremswiderstand bekannt, wobei der Bremswiderstand einen dauerhaft geschlossenen und von Fahrtwind umströmten Abschnitt einer Fahrzeughülle des Fahrzeugs bildet.

Der Erfindung liegt die Aufgabe zugrunde, eine kompakt bauende und energieeffiziente Bremswiderstandvorrichtung bereitzustellen.

Diese Aufgabe wird gelöst durch eine Bremswiderstandvorrichtung mit den Merkmalen des unabhängigen Patentanspruchs 1.

Des Weiteren liegt der Erfindung die Aufgabe zugrunde, ein Verfahren zum Betrieb der Bremswiderstandvorrichtung anzugeben.

Diese Aufgabe wird gelöst durch ein Verfahren mit den Merkmalen des unabhängigen Patentanspruchs 12.

Vorteilhafte Weiterbildungen der vorliegenden Erfindung können jeweils den abhängigen Patentansprüchen entnommen werden.

Die erfindungsgemäße Bremswiderstandvorrichtung für ein Fahrzeug weist mehrere Bremswiderstandelemente auf. Diese mehreren Bremswiderstandelemente weisen jeweils einen rohrförmigen, wärmeleitenden Mantel auf. In dem genannten Mantel ist ein wärmeleitendes und elektrisch isolierendes Material angeordnet. In das wärmeleitende und elektrisch isolierende Material ist über einen Großteil einer Längserstreckung des Mantels hinweg ein elektrischer Leiter eingebettet. Hierbei sind die mehreren Bremswiderstandelemente in einer mehrere Lagen aufweisenden Stapelanordnung angeordnet. Diese mehreren Lagen sind jeweils aus im Wesentlichen parallel zueinander angeordneten Bremswiderstandelementen gebildet. Des Weiteren ist die beschriebene Stapelanordnung dazu eingerichtet, passiv gekühlt zu werden.

Unter einem Großteil einer Längserstreckung des Mantels hinweg ist im vorliegenden Zusammenhang eine Strecke von zumindest 50 % einer gesamten Längserstreckung des Mantels entlang einer Längserstreckungsrichtung eines zugehörigen Bremswiderstandelements verstanden.

Unter einer passiven Kühlung ist eine Abführung einer durch Bremswiderstandelemente von einer elektrischen Energie in eine thermische Energie umgewandelten Bremsenergie mittels einer Fahrtwindströmung, einer Konvektion, einer Wärmestrahlung und/oder durch eine meteorologisch bedingte Luftbewegung zu verstehen. Die Stapelrichtung der Stapelanordnung kann quer oder bevorzugt im Wesentlichen senkrecht zu einer Längserstreckungsrichtung der Bremswiderstandelemente der Stapelanordnung sein.

Mittels einer Wärmekapazität des wärmeleitenden, elektrisch isolierenden Materials kann die in einem Bremsvorgang kurzfristig auftretende thermische Energie kontinuierlich während eines Fahrbetriebs passiv abgeführt werden. Auf einen möglichst raschen Abtransport der bei einem Bremsvorgang entstehenden Wärmemenge, welcher bisher entweder mittels Bremswiderstandelements mit möglichst großen Außenflächen oder einem aktiven Abtransport der Wärmemenge erfolgt, kann verzichtet werden. Dies ermöglicht eine Oberfläche des Mantels der Bremswiderstandelements klein zu halten. Durch die Stapelanordnung kann ein Verhältnis zwischen einer Bremsleistung der Bremswiderstandvorrichtung und einer Grundfläche, welche von den Bremswiderstandelementen der Bremswiderstandvorrichtung überdeckt wird, deutlich vergrößert werden.

Erfindungsgemäß sind die Bremswiderstandelemente der Stapelanordnung derart voneinander beabstandet angeordnet, dass die Stapelanordnung von einem Fahrtwind durchströmbar ist. Dabei kann der Fahrtwind von einer obersten Lage der Stapelanordnung zu einer untersten Lage der Stapelanordnung strömen. Hierdurch können die mehreren Lagen der Bremswiderstandelemente zuverlässig mit Fahrtwind umströmt und gekühlt werden.

Vorzugsweise ist eine vorgesehene Strömungsrichtung der Fahrtwindströmung durch die Stapelanordnung im Wesentlichen parallel zu einer Längserstreckungsrichtung der Bremswiderstandelemente, insbesondere betrachtet in einer Ebene senkrecht zur Stapelrichtung der Stapelanordnung.

Erfindungsgemäß sind die mehreren Lagen jeweils aus Bremswiderstandelementen gebildet, welche im Wesentlichen parallel zueinander in einer Ebene angeordnet sind, die sich im Wesentlichen senkrecht zur Stapelrichtung erstreckt. Dies ermöglicht eine effiziente Ausnutzung eines vorhandenen Bauraums. Die Bremswiderstandelemente verschiedener Lagen der mehreren Lagen sind dabei erfindungsgemäß relativ zueinander in einer Stapelrichtung fluchtend angeordnet.

Erfindungsgemäß ist ein lichter Abstand zwischen unmittelbar benachbart angeordneten Bremswiderstandelementen einer ersten Lage der mehreren Lagen zumindest doppelt so groß, bevorzugt zumindest dreifach so groß, wie ein lichter Abstand zwischen den Bremswiderstandelementen der ersten Lage und den Bremswiderstandelementen einer unmittelbar zur ersten Lage benachbart angeordneten weiteren Lage der mehreren Lagen. Auf diese Weise kann ein Strömungswiderstand der Bremswiderstandvorrichtung reduziert werden. Eine Energieeffizienz der Bremswiderstandvorrichtung kann somit gesteigert werden. Die zuvor genannte erste Lage der mehreren Lagen kann eine beliebige Lage der mehreren Lagen sein und ist nicht beschränkt auf eine oberste Lage und/oder eine unterste Lage der mehreren Lagen.

In einer weiteren vorteilhaften Ausführungsform ist vorgesehen, dass der lichte Abstand zwischen unmittelbar benachbarten Bremswiderstandelementen einer Lage der mehreren Lagen zumindest einen 1,5-fachen Wert einer größten Erstreckung eines der unmittelbar benachbart angeordneten Bremswiderstandelemente aufweist. Die genannte größte Erstreckung des Bremswiderstandelements bemisst sich in einer Ebene im Wesentlichen senkrecht zur Längserstreckungsrichtung des Bremswiderstandelements. Mit dem zuvor bezeichneten lichten Abstand konnte in der Praxis eine widerstandsarm durchströmbare Stapelanordnung realisiert werden.

In einer vorteilhaften Ausführungsvariante der zuvor genannten Ausführungsform weist ein weiterer lichter Abstand zwischen zumindest einem Teil der Bremswiderstandelemente einer ersten Lage der mehreren Lagen und unmittelbar zu diesen Bremswiderstandelementen benachbart angeordneten Bremswiderstandelementen einer weiteren, unmittelbar zur ersten Lage benachbart angeordneten Lage zumindest einen 0,5-fachen Wert der zuvor genannten größten Erstreckung eines der unmittelbar benachbart angeordneten Bremswiderstandelemente auf. Auf diese Weise konnte in der Praxis eine kompakte, widerstandsarm durchströmbare Stapelanordnung realisiert werden.

Eine vorteilhafte Weiterbildung sieht vor, dass die Bremswiderstandelemente der Stapelanordnung mittels Loslager voneinander beabstandet sind, welche stromlinienförmig geformte Prallflächen aufweisen. Unter Prallflächen sind Flächen des Loslagers zu verstehen, welche eine Flächennormale mit einer Richtungskomponente aufweisen, die entgegen einer vorgesehenen Strömungsrichtung der Fahrtwindströmung gerichtet ist. So kann auf strömungswiderstandsarme Weise ein Abstand zwischen benachbarten Bremswiderstandelementen einfach realisiert werden.

In einer vorteilhaften Ausführungsform weisen die Loslager gerundete oder angefaste Prallflächen auf. Hierdurch ist eine aufwandsgünstige Herstellung von strömungsoptimierten Loslagern möglich.

In einer weiteren vorteilhaften Weiterbildung wird vorgeschlagen, dass zumindest ein Fluidleitelement vorgesehen ist, mittels dessen eine Fahrtwindströmung zur Kühlung der mehrlagig angeordneten Bremswiderstandelemente in die Stapelanordnung leitbar ist. Mithilfe des zumindest einen Fluidleitelements kann ein strömungswiderstandsarmes Ein- und/oder Ausleiten der Fahrtwindströmung in die Stapelanordnung zur Kühlung der Bremswiderstandelemente realisiert werden. Eine Fahrtwindströmung ist hierdurch auf eine strömungsoptimierte Weise zwischen die mehreren Lagen der Bremswiderstandelemente der Stapelanordnung leitbar.

In einer vorteilhaften Ausführungsform der zuvor genannten Weiterbildung ist das zumindest eine Fluidleitelement zumindest abschnittsweise als eine Rampe ausgebildet. Dies ermöglicht eine aufwandsgünstige Herstellung eines Fluidleitelements. Des Weiteren wird vorgeschlagen, dass die Rampe zumindest abschnittsweise als eine schiefe Ebene ausgebildet ist. Diese schiefe Ebene ist um einen Winkel aus einem Wertebereich von 10° bis 25°, vorzugsweise aus einem Wertebereich von 19° bis 23° und besonders bevorzugt von im Wesentlichen 21° zur Längserstreckungsrichtung der Bremswiderstandelemente der Stapelanordnung geneigt. Auf diese Weise konnte in der Praxis bereits eine besonders energieeffiziente Einleitung und/oder Ausleitung der Fahrtwindströmung realisiert werden. In einer alternativen Ausführungsvariante ist denkbar, dass die schiefe Ebene um einen Winkel aus einem Wertebereich von 10° bis 17° zur Längserstreckungsrichtung der Bremswiderstandelemente der Stapelanordnung geneigt ist.

In einer weiteren vorteilhaften Ausführungsvariante der Rampe kann eine Fläche der Rampe mit einem Verlauf gemäß einer harmonischen Funktion im mathematischen Sinne vorgesehen sein. Besonders bevorzugt weist die Rampe in deren Übergangsbereichen Rundungen auf. Auf diese Weise können Fluidleiteigenschaften des zumindest einen Fluidleitelements auf einfache Weise optimiert werden.

In einer anderen vorteilhaften Ausführungsvariante ist vorgesehen, dass die Bremswiderstandelemente der Stapelanordnung jeweils das zumindest eine Fluidleitelement durchdringen. Dies ermöglicht eine bauraumeffiziente Anordnung der Bremswiderstandelemente in Kombination mit einer Verringerung des Strömungswiderstands der Bremswiderstandsvorrichtung. Beispielsweise können maßgebliche Strömungswiderstände, wie Prallflächen der Bremswiderstandelemente mit großem Strömungswiderstand, außerhalb einer Fahrtwindströmung angeordnet werden. Vorzugsweise ist hierbei das zumindest eine Fluidleitelement in einem längsseitigen Endbereich der Bremswiderstandvorrichtung angeordnet. Eine erforderliche Überdeckung der Bremswiderstandelemente durch das zumindest eine Fluidleitelement kann minimiert werden.

In einer weiteren vorteilhaften Ausführungsform der Bremswiderstandvorrichtung wird vorgeschlagen, dass Dissipationsstrecken der Bremswiderstandelemente der Stapelanordnung in einem einseitig begrenzten Raum angeordnet sind. Dieser einseitig begrenzte Raum ist durch eine vom Fahrtwind angeströmte Seite des zumindest einen Fluidleitelements begrenzt. Unter einer Dissipationsstrecke ist zumindest ein Streckenabschnitt eines Bremswiderstandelements entlang dessen Längserstreckungsrichtung zu verstehen, welcher relativ zu einer elektrischen Zuleitung des Bremswiderstandelements eine erhöhte Dissipation aufweist. Üblicherweise ist entlang der Dissipationsstrecke der elektrische Leiter in das wärmeleitende, elektrisch isolierende Material eingebettet. Dieser elektrische Leiter weist gegenüber einer elektrischen Zuleitung zum Bremswiderstandelement eine verringerte elektrische Leitfähigkeit auf. Entlang der Dissipationsstrecke ist eine elektrische Energie möglichst effizient in eine thermische Energie umwandelbar. Mittels der zuvor genannten Anordnung kann eine Kühlung der Dissipationsstrecken entlang einer gesamten Erstreckung derselben einfach realisiert werden. Entlang der Längserstreckungsrichtung der Bremswiderstandelemente erstreckt sich jeweils zumindest eine Dissipationstrecke. Vorzugsweise ist die Dissipationsstrecke zusammenhängend ausgebildet. Besonders bevorzugt weist die Dissipationsstrecke eines der Bremswiderstandelemente eine zusammenhängende Gesamtlänge aus einem Wertebereich von 2 m bis 10 m auf. In der Praxis hat sich eine lange zusammenhängende Dissipationsstrecke im Vergleich zu mehreren kürzeren Dissipationsstrecken bewährt.

In einer anderen vorteilhaften Ausführungsvariante der zuvor genannten Weiterbildung ist vorgesehen, dass zwischen einer Rückseite des Fluidleitelements, welche von einer zur Fluidleitung vorgesehenen Vorderseite des Fluidleitelements abgewandt ist, und einem elektrischen Anschlussbereich der Bremswiderstandelemente zumindest eine Trennwand angeordnet ist. Mittels der zumindest einen Trennwand ist ein elektrischer Anschlussbereich der Bremswiderstandelemente thermisch abschirmbar. Beschrieben in anderen Worten ist ausgehend von einem elektrischen Anschlussbereich der Bremswiderstandelemente der Stapelanordnung zumindest eine Trennwand vor dem zumindest einen Fluidleitelement angeordnet. Auf diese Weise können elektrische Anschlüsse der Bremswiderstandelemente einfach vor thermischer Energie, insbesondere vor einem Hitzestau, geschützt werden. So kann ein Eindringen einer aufgeheizten Fahrtwindströmung in den elektrischen Anschlussbereich der Bremswiderstandelemente verhindert werden.

In einer vorteilhaften Weiterbildung wird vorgeschlagen, dass die Dissipationsstrecken der Bremswiderstandelemente einer ersten der mehreren Lagen und die Dissipationsstrecken der Bremswiderstandelemente einer weiteren der mehreren Lagen unterschiedlich lang ausgebildet sind. Indem die Dissipationsstrecken an einen Verlauf des zumindest einen Fluidleitelements und/oder einen vorgesehenen Verlauf der Fahrtwindströmung angepasst werden, kann eine Bremsleistung optimiert werden.

In einer weiteren vorteilhaften Weiterbildung ist vorgesehen, dass ein Widerstand der in die Bremswiderstandelemente einer ersten der mehreren Lagen eingebetteten elektrischen Leiter und ein Widerstand der in die Bremswiderstandelemente einer weiteren der mehreren Lagen eingebetteten elektrischen Leiter unterschiedlich groß ist. Durch unterschiedlich große Widerstände kann eine entsprechend unterschiedlich große Umwandlung von einer elektrischen Energie in eine thermische Energie realisiert werden. Dies ermöglicht es, größere Energiemengen in Bereichen innerhalb der Stapelanordnung umzuwandeln, in welchen ein erhöhtes Potential zum Abtransport dieser thermischen Energie durch die Fahrtwindströmung vorliegt. Hierdurch können Temperaturunterschiede innerhalb der Stapelanordnung verringert werden. Vorzugsweise sind in den Bremswiderstandelementen der obersten Lage der mehreren Lagen elektrische Leiter eingebettet, mittels welchen im Vergleich zu den elektrischen Leitern, welche in die Bremswiderstandelemente der übrigen Lagen der mehreren Lagen eingebettet sind, eine größere Menge an elektrischer Energie in eine thermische Energie umwandelbar ist. Im Vergleich zu den übrigen Lagen der mehreren Lagen kann so eine größere Menge an thermischer Energie während eines Bremsvorgangs in der obersten Lage erzeugt werden. Hierdurch kann die bessere Wärmeabfuhr der obersten Lage im Vergleich zu den übrigen Lagen genutzt werden, um eine verbesserte Temperaturverteilung innerhalb der Stapelanordnung zu ermöglichen. Des Weiteren kann auf diese Weise ein Verhältnis von einer Leistung der Bremswiderstandvorrichtung und einer zur Abführung der umgewandelten thermischen Energie erforderlichen Oberfläche der Bremswiderstandelemente optimiert werden. Zudem kann so eine Effizienz der Bremswiderstandvorrichtung verbessert werden.

In einer anderen vorteilhaften Weiterbildung ist vorgesehen, dass die Stapelanordnung in einem Gehäuse, insbesondere in einem wannenförmigen Gehäuse, angeordnet ist. Das Gehäuse weist hierbei auf einer Seite eine Öffnung auf, die sich über zumindest 80 % einer Länge einer der Dissipationsstrecken der Bremswiderstandelemente der Stapelanordnung, vorzugsweise über eine gesamte Länge einer längsten Dissipationsstrecke der Dissipationsstrecken der Bremswiderstandelemente der Stapelanordnung, erstreckt. Auf diese Weise kann eine strömungswiderstandsarme Führung der Fahrtwindströmung durch die Stapelanordnung erreicht werden.

In einer vorteilhaften Ausführungsvariante der Weiterbildung ist eine maximale Stapelhöhe der Stapelanordnung kleiner oder gleich einer maximalen Gehäusehöhe des Gehäuses. So kann ein Strömungswiderstand der Bremswiderstandvorrichtung weiter verringert werden.

In einer weiteren vorteilhaften Ausführungsvariante der Weiterbildung ist das Gehäuse an zumindest zwei Seiten von jeweils einem Fluidleitelement begrenzt. Dies ermöglicht eine strömungswiderstandsarme Einleitung und Ausleitung der Fahrtwindströmung mittels der Fluidleitelemente durch die mehreren Lagen der Stapelanordnung. Eine Kühlung der Bremswiderstandvorrichtung kann auf diese Weise unabhängig von einer Fahrtrichtung erreicht werden.

Vorzugsweise ist die Stapelanordnung derart in dem Gehäuse angeordnet, dass jedes der Bremswiderstandelemente der Stapelanordnung das Gehäuse entlang der Längserstreckungsrichtung der Bremswiderstandelemente jeweils an zwei Positionen durchdringt. Dies ermöglicht es, beidseitig an Bremswiderstandelementen vorhandene Strömungswiderstände, wie die zuvor bereits genannten Prallflächen, außerhalb der Fahrtwindströmung anzuordnen. Des Weiteren sind bevorzugt zumindest zwei Trennwände vorgesehen, welche außerhalb des Gehäuses jeweils in einem der beiden längsseitigen Endbereichen der Bremswiderstandelemente der Stapelanordnung angeordnet sind. Eine thermische Abschirmung der elektrischen Anschlussbereiche der Bremswiderstandelemente kann so unabhängig von einer Strömungsrichtung der Fahrwindströmung realisiert werden.

In einer anderen weiteren vorteilhaften Ausführungsform der zuvor genannten Weiterbildung sind die Dissipationsstrecken der Bremswiderstandelemente der Stapelanordnung ausschließlich innerhalb des Gehäuses angeordnet. Dies ermöglicht eine Kühlung der Dissipationsstrecken entlang deren gesamten Länge mittels der Fahrtwindströmung.

Vorzugsweise sind die unterschiedlich langen Dissipationsstrecken der Bremswiderstandelemente der mehreren Lagen der Stapelanordnung wenigstens teilweise an eine maximale Längsausdehnung des Gehäuses angepasst. Dies ermöglicht eine Optimierung der Bremsleistung.

In einer vorteilhaften Ausführungsform sind die Bremswiderstandelemente der Stapelanordnung relativ zu dem Gehäuse derart angeordnet, dass diese in einer Richtung im Wesentlichen senkrecht zur Längserstreckungsrichtung der Bremswiderstandelemente weitestgehend mit einem lichten Maß von zumindest dem 1,5-fachen der größten Erstreckung der betreffenden Bremswiderstandelemente beabstandet sind. Auf diese Weise kann eine Fahrtwindströmung auch in Randbereichen angeordnete Bremswiderstandelemente, insbesondere deren Dissipationsstrecken kühlen. Ein Hitzestau in Randbereichen kann so vermieden werden.

Vorteilhafterweise ist ein Fahrzeug mit der erfindungsgemäßen Bremswiderstandvorrichtung ausgestattet. Das Fahrzeug weist eine Fahrzeughülle auf. In der Fahrzeughülle ist eine Einformung ausgebildet. Die Bremswiderstandvorrichtung ist hierbei derart in der Einformung der Fahrzeughülle versenkt angeordnet, dass eine oberste Lage der mehreren Lagen der Stapelanordnung der Bremswiderstandvorrichtung eben mit oder unterhalb der die Einformung umgebenden Fahrzeughülle angeordnet ist. Das zumindest eine Fluidleitelement kann zumindest abschnittsweise eine umgebende Fahrzeughülle überragen. Auf diese Weise kann ein Fahrzeug mit kompakt bauender Bremswiderstandvorrichtung bereitgestellt werden. Insbesondere kann eine Verschlechterung eines Gesamtströmungswiderstands des Fahrzeugs auf diese Weise verhindert werden.

In einer vorteilhaften Weiterbildung des Fahrzeugs ist die Bremswiderstandvorrichtung auf einem Dach des Fahrzeugs in der Fahrzeughülle versenkt angeordnet. Dies ermöglicht eine betriebssichere Anordnung der Bremswiderstandvorrichtung.

Mittels des erfindungsgemäßen Verfahrens kann die erfindungsgemäße Bremswiderstandvorrichtung oder das Fahrzeug mit einer solchen Bremswiderstandvorrichtung betrieben werden.

Das erfindungsgemäße Verfahren sieht vor, dass die mehrlagig in einer Stapelanordnung übereinander angeordneten Bremswiderstandelemente durch eine Fahrtwindströmung passiv gekühlt werden. Dies ermöglicht eine energieeffiziente Kühlung der Bremswiderstandvorrichtung, bei welcher auf zusätzliche Energieaufwendungen zur Kühlung der Bremswiderstandvorrichtung, beispielsweise mittels aktiven Kühlvorrichtungen, verhindert werden kann.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung eines Ausführungsbeispiels der Erfindung näher erläutert. Soweit zweckdienlich, werden in den Figuren dieselben Bezugszeichen für dieselben oder einander entsprechende Elemente der Erfindung verwendet. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Zudem können alle angegebenen Merkmale isoliert betrachtet und in geeigneter Weise mit den Merkmalen eines beliebigen Anspruchs kombiniert werden.

Es zeigen:
- FIG 1: eine schematische Darstellung eines Fahrzeugs mit einem Beispiel der erfindungsgemäßen Bremswiderstandvorrichtung und eine Illustration eines Beispiels des erfindungsgemäßen Betriebs der Bremswiderstandvorrichtung;
- FIG 2: eine schematische Darstellung eines Querschnitts in einer Ebene senkrecht zu einer Längserstreckungsrichtung der Bremswiderstandelemente des Ausführungsbeispiels der Bremswiderstandvorrichtung;
- FIG 3: ein Detailansicht eines Loslagers des Ausführungsbeispiels der Bremswiderstandvorrichtung in einer schematischen Darstellung;
- FIG 4: einen Endbereich des Ausführungsbeispiels der Bremswiderstandvorrichtung in einer schematischen Darstellung.

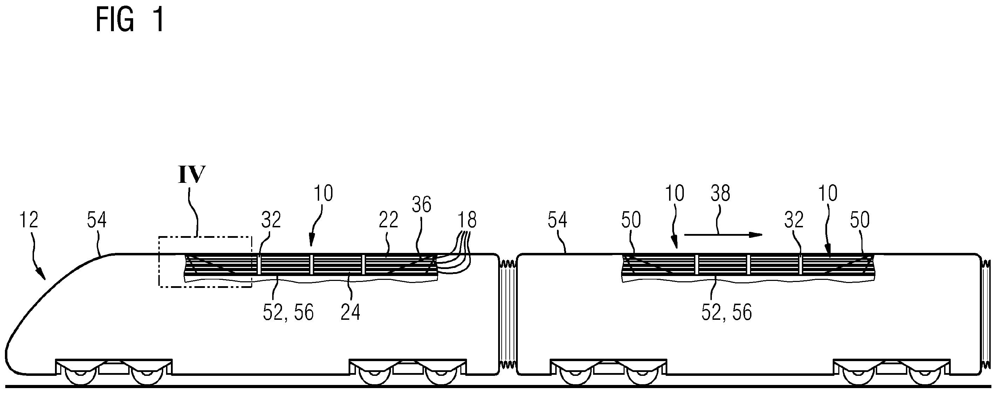

FIG 1 zeigt eine schematische Darstellung eines Ausführungsbeispiels der erfindungsgemäßen Bremswiderstandvorrichtung 10 in einem Fahrzeug 12. Des Weiteren illustriert FIG 1 ein erfindungsgemäßes Verfahren zum Betrieb der Bremswiderstandvorrichtung 10.

Das Fahrzeug 12 ist als ein schienengebundenes, mehrgliedriges Fahrzeug ausgebildet und weist eine Fahrzeughülle 54 auf. In der Fahrzeughülle 54 ist eine Einformung 56 vorgesehen. Die Einformung 56 ist auf dem Dach des Fahrzeugs 12 in der Fahrzeughülle 54 angeordnet. In dieser Einformung 56 ist die Bremswiderstandvorrichtung 10 versenkt angeordnet. Diese Bremswiderstandvorrichtung 10 wird mittels einer Fahrtwindströmung 38 passiv gekühlt.

Die Bremswiderstandvorrichtung 10 weist eine Stapelanordnung 14 mit vier in einer Stapelrichtung 16 übereinander angeordneten Lagen 18 aus Bremswiderstandelementen 20 auf. Jede der vier Lagen 18 ist aus mehreren im Wesentlichen parallel zueinander in einer Ebene angeordneten Bremswiderstandelementen 20 gebildet. Jede der vier Ebenen, in welcher die Bremswiderstandelemente 20 angeordnet sind, erstreckt sich im Wesentlichen senkrecht zu der Stapelrichtung 16.

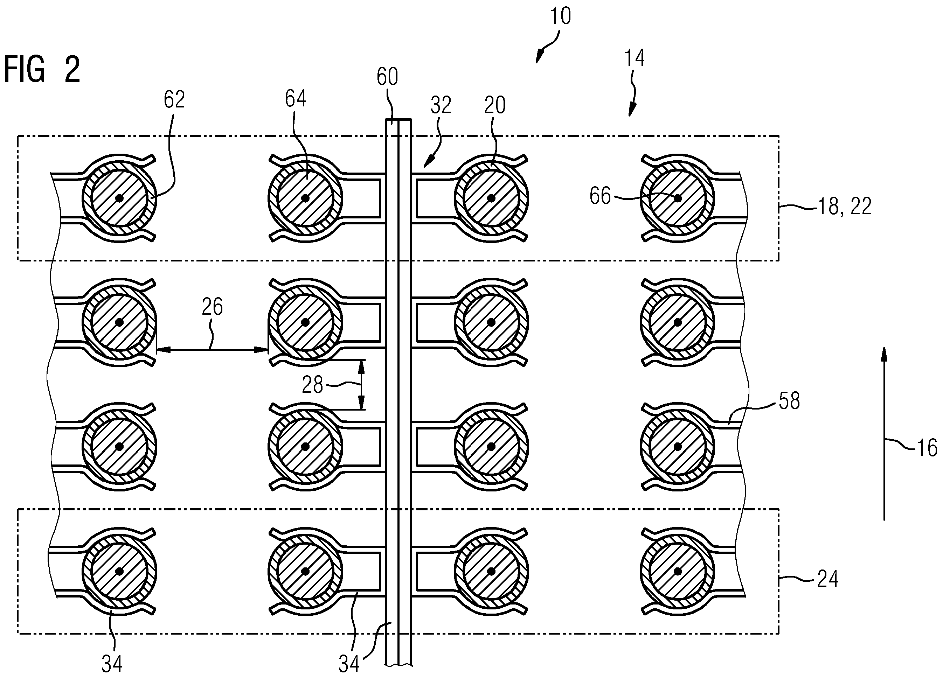

In FIG 2 ist ein Querschnitt durch die Stapelanordnung 14 in einer Ebene dargestellt, welche sich im Wesentlichen senkrecht zu einer Längserstreckungsrichtung 30 der Bremswiderstandelemente 20 erstreckt.

Im vorliegenden Ausführungsbeispiel entspricht ein Aufbau der Bremswiderstandelemente 20 jeweils einem bereits bekannten Rohrheizkörper. Hierbei weist jedes der Bremswiderstandelemente 20 einen rohrförmigen Mantel 62 mit einem runden Querschnitt auf. In gleicher Weise ist alternativ auch ein polygoner Querschnitt des Mantels denkbar. Der Mantel 62 besteht aus einem hochtemperaturbeständigen Metall oder einer hochtemperaturbeständigen Metalllegierung, insbesondere aus Edelstahl oder einer Nickelbasislegierung. In dem Mantel 62 ist abschnittsweise ein wärmeleitendes und elektrisch isolierendes Material 64 vorgesehen. Im vorliegenden Ausführungsbeispiel handelt es sich bei diesem wärmeleitenden und elektrisch isolierenden Material 64 um Magnesiumoxid. In das wärmeleitende und elektrisch isolierende Material 64 ist ein elektrischer Leiter 66 eingebettet. Dieser elektrische Leiter 66 weist eine im Vergleich zu einer elektrischen Zuleitung zum Bremswiderstandelement 20 erhöhte Dissipation auf. Auf diese Weise entsteht entlang der Längserstreckungsrichtung 30 des Rohrheizkörpers und somit des Bremswiderstandelements 20 eine Dissipationsstrecke 42. Entlang der Dissipationsstrecke 42 ist eine elektrische Energie in eine thermische Energie umwandelbar. Mittels des genannten Materials 64 ist es möglich, kurzfristig auftretende hohe Mengen an thermischer Energie zu speichern und daraufhin kontinuierlich an eine Umgebung abzugeben. Dies ermöglicht es, die Stapelanordnung 14 trotz, insbesondere kurzfristig auftretender, hoher Mengen an thermischer Energie allein mittels der Fahrtwindströmung 38 zu kühlen. Im vorliegenden Ausführungsbeispiel weist eine jede Dissipationsstrecke 42 der Dissipationsstrecken 42 eine zusammenhängende Länge von mindestens sechs Metern auf.

Die Bremswiderstandelemente 20 der Stapelanordnung 14 sind in der Art voneinander beabstandet angeordnet, dass die Stapelanordnung 14 von einem Fahrtwind durchströmbar ist. Dabei kann der Fahrtwind von einer obersten Lage 22 der Stapelanordnung 14 zu einer untersten Lage 24 der Stapelanordnung 14 strömen. Auf diese Weise kann der Fahrtwind alle Bremswiderstandelemente 20 der vier Lagen 18 umströmen und kühlen. Eine an den Bremswiderstandelementen 20 umgewandelte elektrische Energie kann so als thermische Energie mit dem Fahrtwind abtransportiert werden. Damit hierbei ein möglichst geringer Strömungswiderstand erreicht wird, weist ein lichter Abstand 26 zwischen unmittelbar benachbarten Bremswiderstandelementen 20 einer jeder der vier Lagen 18 einen 1,5-fachen Wert des Rohrdurchmessers der Bremswiderstandelemente 20 auf. Zudem beträgt ein weiterer lichter Abstand 28 zwischen Bremswiderstandelementen 20 einer Lage der vier Lagen 18 zu unmittelbar zu diesen Bremswiderstandelementen 20 benachbart angeordneten Bremswiderstandelementen 20 einer unmittelbar zu dieser Lage benachbart angeordneten Lage der vier Lagen 18 zumindest einen 0,5-fachen Wert des Rohrdurchmessers der Bremswiderstandelemente 20. Auf diese Weise ist der lichte Abstand 26 zwischen unmittelbar benachbart angeordneten Bremswiderstandelementen 20 einer der vier Lagen 18 dreifach so groß wie der weitere lichte Abstand 28 zwischen den Bremswiderstandelementen 20 einer der vier Lagen und den Bremswiderstandelementen 20 einer unmittelbar zu dieser Lage benachbart angeordneten weiteren Lage der vier Lagen 18.

Um die Bremswiderstandelemente 20 wie zuvor beschrieben voneinander zu beabstanden, sind im vorliegenden Ausführungsbeispiel Loslager 32 vorgesehen. Diese Loslager 32 können jeweils mehrere Loslager-Haltelaschen 58 aufweisen, die an einem Loslager-Trägerabschnitt 60 befestigt sind. Die Loslager-Haltelaschen 58 sind dazu eingerichtet, eine Gleitbewegung der Bremswiderstandelemente 20 entlang einer Längserstreckungsrichtung 30 der Bremswiderstandelemente 20 relativ zu den Loslager-Haltelaschen 58 zuzulassen. Des Weiteren sind nicht näher dargestellte Dämmplatten vorgesehen, mittels deren eine Wärmeleitung ausgehend von den Bremswiderstandelementen 20 durch die Loslager 32 in eine tragende Struktur verhindert wird.

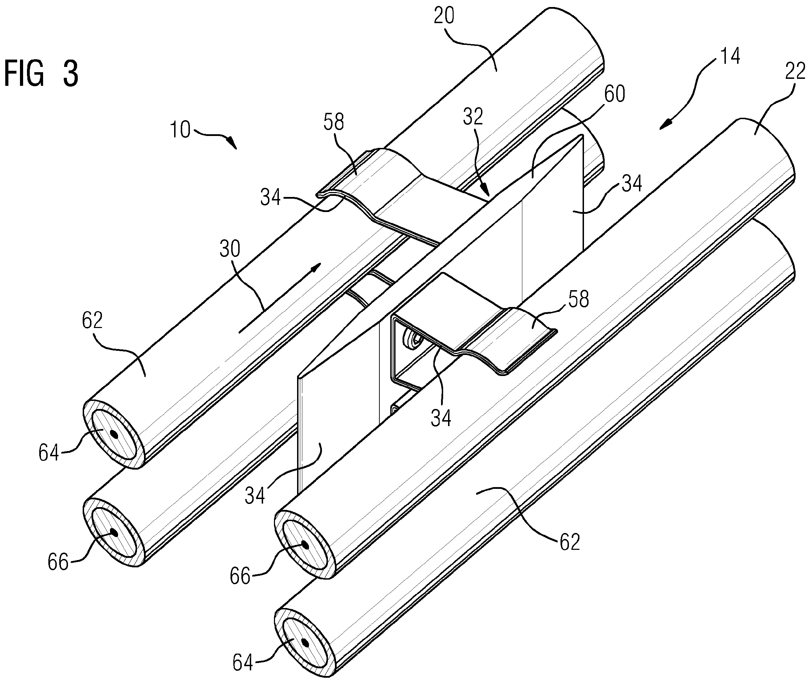

FIG 3 zeigt ein Ausführungsbeispiel des zuvor beschriebenen Loslagers 32 mit stromlinienförmig geformten Prallflächen 34 in einer schematischen Darstellung. Hierbei ist ein Ausschnitt der Stapelanordnung 14 gezeigt. Sowohl Prallflächen 34 der Loslager-Haltelaschen 58 als auch Prallflächen 34 des Loslager-Trägerabschnitts 60 sind angefast ausgebildet. Vorzugsweise weist eine Länge einer angefasten Fläche des Loslager-Trägerabschnitts 60, gemessen in einer Ebene im Wesentlichen senkrecht zur Stapelrichtung 16, in etwa das 4,5-fache einer Dicke des Loslager-Trägerabschnitts 60, gemessen in dieser Ebene, auf. Zudem sind die Prallflächen 34 abschnittsweise gerundet ausgebildet. Ein Strömungswiderstand der Loslager 32 kann auf diese Weise minimiert werden.

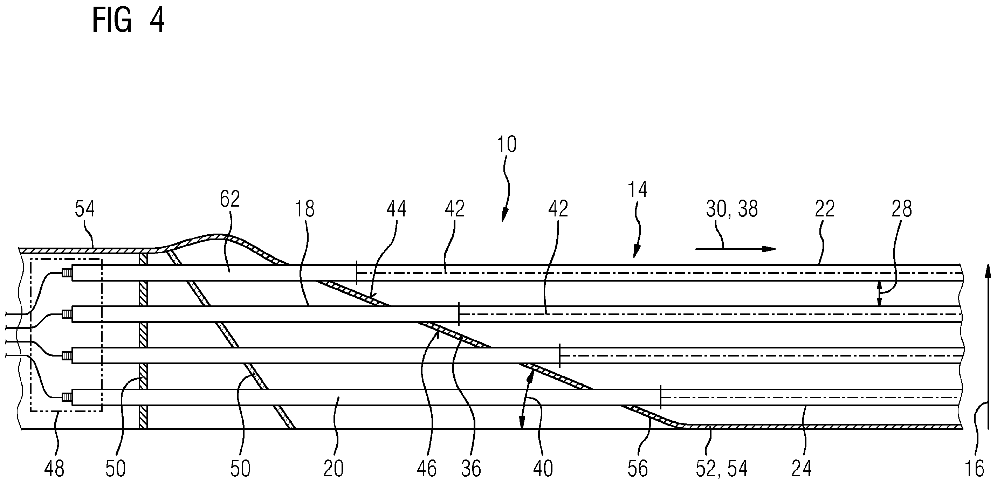

FIG 4 zeigt in einer schematischen Darstellung einen Ausschnitt der in FIG 1 gezeigten Bremswiderstandvorrichtung 10 in einer Ebene im Wesentlichen senkrecht zu der Stapelrichtung 16 und zu der Längserstreckungsrichtung 30 der Bremswiderstandelemente 20. Die Position des in FIG 4 gezeigten Abschnitts der Bremswiderstandvorrichtung 10 ist in FIG 1 mit der römischen Ziffer "IV" kenntlich gemacht und entspricht einem von zwei sich gegenüberliegenden Endbereichen der Bremswiderstandvorrichtung 10. Diese genannten, sich gegenüberliegenden Endbereiche entsprechen sich spiegelbildlich. Der besseren Darstellbarkeit halber ist daher lediglich einer der beiden genannten Endbereiche, stellvertretend für beide Endbereiche gezeigt.

Die Stapelanordnung 14 ist im vorliegenden Ausführungsbeispiel in einem Gehäuse 52 angeordnet. Das Gehäuse 52 ist wannenförmig ausgebildet und weist auf einer Oberseite eine Öffnung auf. Die Öffnung erstreckt sich in der Längserstreckungsrichtung 30 der Bremswiderstandelemente 20 über eine gesamte Länge der Dissipationsstrecken 42 der Bremswiderstandelemente 20. Im vorliegenden Ausführungsbeispiel ist das Gehäuse 52, wie auch in FIG 1 gezeigt, einstückig mit der Einformung 56 der Fahrzeughülle 54 ausgebildet. Im vorliegenden Ausführungsbeispiel ist eine maximale Stapelhöhe der Stapelanordnung 14 kleiner als eine maximale Gehäusehöhe des Gehäuses 52. Auf diese Weise kann die Bremswiderstandvorrichtung 10 derart in der Einformung 56 versenkt angeordnet werden, dass die oberste Lage 22 der vier Lagen 18 unterhalb einer die Einformung 56 umgebenden Fahrzeughülle 54 angeordnet ist. Des Weiteren ist im vorliegenden Ausführungsbeispiel das Gehäuse 52 und somit die Einformung 56 an zwei Seiten von jeweils einem Fluidleitelement 36 begrenzt. Die Fluidleitelemente 36 sind dazu eingerichtet, zur Kühlung der mehrlagig angeordneten Bremswiderstandelemente 20 die Fahrtwindströmung 38 in die Stapelanordnung 14 einzuleiten und die Fahrtwindströmung 38 aus der Stapelanordnung 14 auszuleiten. Die beiden Fluidleitelemente 36 sind jeweils in einem der oben genannten Endbereichen der Bremswiderstandvorrichtung 10 angeordnet. Jedes der beiden Fluidleitelemente 36 ist abschnittsweise als eine Rampe ausgebildet. Diese Rampe weist eine schiefe Ebene auf, welche im vorliegenden Ausführungsbeispiel um einen Winkel 40 von im Wesentlichen 21° zu der Längserstreckungsrichtung 30 der Bremswiderstandelemente 20 geneigt ist. Des Weiteren weisen die Fluidleitelemente 36 in deren Übergangsbereichen zu der Fahrzeughülle 54 jeweils Rundungen auf. Diese Rundung überragt im vorliegenden Ausführungsbeispiel eine Höhe eines direkt angrenzenden Bereichs der Fahrzeughülle 54. Auf diese Weise werden die mehrlagig in der Stapelanordnung 14 übereinander angeordnete Bremswiderstandelemente 20 strömungswiderstandsarm mittels der Fahrtwindströmung 38 passiv gekühlt.

Die Bremswiderstandelemente 20 der Stapelanordnung 14 durchdringen die beiden Fluidleitelemente 36 jeweils. Die Dissipationsstrecken 42 der Bremswiderstandelemente 20 hingegen sind ausschließlich in einem von der Fahrtwindströmung 38 durchströmten Bereich des Gehäuses 52 angeordnet und enden jeweils vor einer von dem Fahrtwind angeströmten Vorderseite 44 der Fluidleitelemente 36. Auf diese Weise sind die Dissipationsstrecken 42 der Bremswiderstandelemente 20 ausschließlich in einem von den durch den Fahrtwind angeströmten Vorderseiten 44 der beiden Fluidleitelemente 36 begrenzten Raum innerhalb des Gehäuses 52 angeordnet. Die Dissipationsstrecken 42 der Bremswiderstandelemente 20 der obersten Lage 22 sind länger als die Dissipationsstrecken 42 der Bremswiderstandelemente 20 der unterhalb der obersten Lage 22 angeordneten Lagen 18. Zudem sind in den Bremswiderstandelementen 20 der obersten Lage 22 elektrische Leiter 66 eingebettet, welche im Vergleich zu elektrischen Leitern 66, welche in einem der übrigen Bremswiderstandelemente 20 der übrigen Lagen der mehreren Lagen 18 eingebettet sind, eine größere Menge an elektrischer Energie in eine thermische Energie umgewandelt. Eine bessere Wärmeabfuhr durch die Fahrtwindströmung 38 an der obersten Lage 22 im Vergleich zu übrigen Lagen der mehreren Lagen 18 führt so dazu, dass eine Variation einer Temperatur innerhalb der Stapelanordnung 14 verringert wird. Im vorliegenden Ausführungsbeispiel sind die Dissipationsstrecken 42 der Bremswiderstandelemente 20 der untersten Lage 24 im Vergleich zu den Dissipationsstrecken 42 der Bremswiderstandelemente 20 der übrigen Lagen die kürzesten Dissipationsstrecken 42. Die Dissipationsstrecken 42 sind hierbei an den abschnittsweise rampenförmigen Verlauf der beiden Fluidleitelemente 36 angepasst.

Des Weiteren sind im vorliegenden Ausführungsbeispiel Trennwände 50 vorgesehen, mittels deren ein elektrischer Anschlussbereich 48 der Bremswiderstandelemente 20 thermisch abschirmbar ist. Zwischen dem elektrischen Anschlussbereich 48 und einer Rückseite 46 eines jedem der beiden Fluidleitelemente 36 sind zwei Trennwände 50 angeordnet. Die jeweils zwei Trennwände 50 weisen unterschiedliche Neigungen gegenüber der Längserstreckungsrichtung 30 der Bremswiderstandelemente 20 auf. Auf diese Weise kann einfach verhindert werden, dass große Anteile eines thermisch aufgeladenen Fahrtwindstroms 38 in den elektrischen Anschlussbereich 48 der Bremswiderstandelemente 20 gelangt.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bremswiderstandvorrichtung (10) für ein Fahrzeug (12) aufweisend
- mehrere Bremswiderstandelemente (20), welche jeweils einen rohrförmigen, wärmeleitenden Mantel (62) aufweisen;
- wobei in dem Mantel (62) ein wärmeleitendes und elektrisch isolierendes Material (64) angeordnet ist;
- wobei ein elektrischer Leiter (66) über zumindest 50 % einer gesamten Längserstreckung des Mantels (62) entlang einer Längserstreckung eines zugehörigen Bremswiderstandelements (20) hinweg in das wärmeleitende und elektrisch isolierende Material (64) eingebettet ist;
- wobei die mehreren Bremswiderstandelemente (20) in einer Stapelanordnung (14) mit mehreren Lagen (18) angeordnet sind;
- wobei die mehreren Lagen (18) jeweils aus Bremswiderstandelementen (20) gebildet sind, welche im Wesentlichen parallel zueinander in einer Ebene angeordnet sind, die sich im Wesentlichen senkrecht zur Stapelrichtung (16) erstreckt;
- wobei die Bremswiderstandelemente (20) verschiedener Lagen der mehreren Lagen (18) relativ zueinander in der Stapelrichtung fluchtend angeordnet sind,
- wobei die Bremswiderstandelemente (20) der Stapelanordnung (14) derart voneinander beabstandet angeordnet sind, dass die Stapelanordnung (14) von einem Fahrtwind durchströmbar ist und dabei der Fahrtwind von einer obersten Lage (22) der Stapelanordnung (14) zu einer untersten Lage (24) der Stapelanordnung (14) strömen kann,
- wobei ein lichter Abstand (26) zwischen unmittelbar benachbart angeordneten Bremswiderstandelementen (20) einer ersten Lage der mehreren Lagen (18) zumindest doppelt so groß ist, bevorzugt zumindest dreifach so groß ist, wie ein weiterer lichter Abstand (28) zwischen den Bremswiderstandelementen (20) der ersten Lage und den Bremswiderstandelementen (20) einer unmittelbar zur ersten Lage benachbart angeordneten weiteren Lage der mehreren Lagen (18); und
- wobei die Stapelanordnung (14) dazu eingerichtet ist, passiv gekühlt zu werden.

2. Bremswiderstandvorrichtung nach Anspruch 1,
**dadurch gekennzeichnet, dass**
der lichte Abstand (26) zwischen unmittelbar benachbarten Bremswiderstandelementen (20) einer Lage der mehreren Lagen (18) zumindest einen 1,5-fachen Wert einer größten Erstreckung eines der unmittelbar benachbart angeordneten Bremswiderstandelemente (20), gemessen in einer sich im Wesentlichen senkrecht zur Längserstreckungsrichtung (30) des Bremswiderstandelements (20) erstreckenden Ebene, aufweist.

3. Bremswiderstandvorrichtung (10) nach einem der vorhergehenden Ansprüche,
**dadurch gekennzeichnet, dass**
die Bremswiderstandelemente (20) der Stapelanordnung (14) mittels Loslager (32) voneinander beabstandet sind, welche stromlinienförmig geformte Prallflächen (34) aufweisen.

4. Bremswiderstandvorrichtung (10) nach einem der vorhergehenden Ansprüche,
**dadurch gekennzeichnet, dass**
zumindest ein Fluidleitelement (36) vorgesehen ist, mittels dessen eine Fahrtwindströmung (38) zur Kühlung der mehrlagig angeordneten Bremswiderstandelemente (20) in die Stapelanordnung (14) leitbar ist.

5. Bremswiderstandvorrichtung (10) nach Anspruch 4,
**dadurch gekennzeichnet, dass**
das zumindest eine Fluidleitelement (36) zumindest abschnittsweise als eine Rampe ausgebildet ist,
- die Rampe zumindest abschnittsweise als eine schiefe Ebene ausgebildet ist und
- die schiefe Ebene um einen Winkel (40) aus einem Wertebereich von 10° bis 25°, vorzugsweise aus einem Wertebereich von 19° bis 23° und besonders bevorzugt von im Wesentlichen 21° zu einer Längserstreckungsrichtung (30) der Bremswiderstandelemente (20) der Stapelanordnung (14) geneigt ist.

6. Bremswiderstandvorrichtung (10) nach Anspruch 4 oder 5, **dadurch gekennzeichnet, dass**
- die Bremswiderstandelemente (20) der Stapelanordnung (14) jeweils das zumindest eine Fluidleitelement (36) durchdringen und
- Dissipationsstrecken (42) der Bremswiderstandelemente (20) der Stapelanordnung (14) in einem einseitig begrenzten Raum angeordnet sind, welcher durch eine vom Fahrtwind angeströmte Vorderseite (44) des zumindest einen Fluidleitelements (36) begrenzt ist.

7. Bremswiderstandvorrichtung (10) nach Anspruch 6,
**dadurch gekennzeichnet, dass**
- zwischen einer Rückseite (46) des Fluidleitelements (36), welche von einer zur Fluidleitung vorgesehenen Vorderseite (44) des Fluidleitelements (36) abgewandt ist, und einem elektrischen Anschlussbereich (48) der Bremswiderstandelemente (20) zumindest eine Trennwand (50) angeordnet ist und
- mittels der zumindest einen Trennwand (50) ein elektrischer Anschlussbereich (48) der Bremswiderstandelemente (20) thermisch abschirmbar ist.

8. Bremswiderstandvorrichtung (10) nach einem der vorhergehenden Ansprüche,
**dadurch gekennzeichnet, dass**
die Dissipationsstrecken (42) der Bremswiderstandelemente (20) einer ersten Lage der mehreren Lagen (18) und die Dissipationsstrecken (42) der Bremswiderstandelemente (20) einer weiteren Lage der mehreren Lagen (18) unterschiedlich lang ausgebildet sind.

9. Bremswiderstandvorrichtung (10) nach einem der vorhergehenden Ansprüche,
**dadurch gekennzeichnet, dass**
- die Stapelanordnung (14) in einem Gehäuse (52), insbesondere in einem wannenförmigen Gehäuse, angeordnet ist, welches auf einer Seite eine Öffnung aufweist, die sich über zumindest 80% einer Länge einer der Dissipationsstrecken (42) der Bremswiderstandelemente (20) der Stapelanordnung (14), vorzugsweise über eine gesamte Länge einer längsten Dissipationsstrecke der Dissipationsstrecken (42) der Bremswiderstandelemente (20) der Stapelanordnung (14), erstreckt und
- eine maximale Stapelhöhe der Stapelanordnung (14) kleiner oder gleich einer maximalen Gehäusehöhe des Gehäuses (52) ist.

10. Bremswiderstandvorrichtung (10) nach Anspruch 9
**dadurch gekennzeichnet, dass**
die Dissipationsstrecken (42) der Bremswiderstandelemente (20) der Stapelanordnung (14) ausschließlich innerhalb des Gehäuses (52) angeordnet sind.

11. Fahrzeug (12) mit einer Fahrzeughülle (54) und mit einer Bremswiderstandvorrichtung (10) nach einem der vorhergehenden Ansprüche, welche derart in einer Einformung (56) der Fahrzeughülle (54) versenkt angeordnet ist, dass eine oberste Lage (22) der mehreren Lagen (18) einer Stapelanordnung (14) der Bremswiderstandvorrichtung (10) eben mit oder unterhalb der die Einformung (56) umgebenden Fahrzeughülle (54) angeordnet ist.

12. Verfahren zum Betrieb der Bremswiderstandvorrichtung (10) nach einem der Ansprüche 1 bis 10, wobei mehrlagig in einer Stapelanordnung (14) übereinander angeordnete Bremswiderstandelemente (20) durch eine Fahrtwindströmung (38) gekühlt werden.

## Claims

1. Braking resistor device (10) for a vehicle (12) comprising
- a plurality of braking resistor elements (20), each having a tubular, thermally conductive jacket (62);
- wherein a thermally conductive and electrically insulating material (64) is arranged in the jacket (62);
- wherein an electrical conductor (66) is embedded in the thermally conductive and electrically insulating material (64) over at least 50% of a total longitudinal extent of the jacket (62) along a longitudinal extent of an associated braking resistor element (20);
- wherein the plurality of braking resistor elements (20) are arranged in a stack arrangement (14) with a plurality of layers (18);
- wherein the plurality of layers (18) are each formed from braking resistor elements (20) which are arranged substantially parallel to each other in a plane which extends substantially perpendicularly with respect to the stack direction (16);
- wherein the braking resistor elements (20) of different layers of the plurality of layers (18) are arranged so as to be flush relative to one another in the stack direction,
- wherein the braking resistor elements (20) of the stack arrangement (14) are arranged spaced apart from each other in such a way that the stack arrangement (14) can be flowed through by an airflow, and the airflow can flow from an uppermost position (22) of the stack arrangement (14) to a bottommost position (24) of the stack arrangement (14),
- wherein a clear distance (26) between immediately adjacently arranged braking resistor elements (20) of a first layer of the plurality of layers (18) is at least twice as large, preferably at least three times as large, as a further clear distance (28) between the braking resistor elements (20) of the first layer and the braking resistor elements (20) of a further layer of the plurality of layers (18) which is arranged directly adjacently to the first layer; and
- wherein the stack arrangement (14) is configured to be passively cooled.

2. Braking resistor device according to Claim 1,
**characterized in that**
the clear distance (26) between directly adjacent braking resistor elements (20) of one layer of the plurality of layers (18) is at least 1.5 times a largest extent of one of the directly adjacently arranged braking resistor elements (20), measured in a plane extending substantially perpendicularly with respect to the longitudinal extent direction (30) of the braking resistor element (20).

3. Braking resistor device (10) according to either of the preceding claims,
**characterized in that**
the braking resistor elements (20) of the stack arrangement (14) are spaced from each other by means of floating bearings (32) which have streamlined deflector surfaces (34).

4. Braking resistor device (10) according to either of the preceding claims,
**characterized in that**
at least one fluid guiding element (36) is provided, by means of which a travel airflow (38) can be guided into the stack arrangement (14) for cooling the braking resistor elements (20) which are arranged in a plurality of layers.

5. Braking resistor device (10) according to Claim 4,
**characterized in that**
the at least one fluid guiding element (36) is formed at least in sections as a ramp,
- the ramp is designed at least in sections as an oblique plane, and
- the oblique plane is inclined by an angle (40) from a value range of 10° to 25°, preferably from a value range of 19° to 23° and particularly preferably of substantially 21° with respect to a longitudinal extent direction (30) of the braking resistor elements (20) of the stack arrangement (14).

6. Braking resistor device (10) according to Claim 4 or 5,
**characterized in that**
- the braking resistor elements (20) of the stack arrangement (14) each penetrate the at least one fluid guiding element (36), and
- dissipation sections (42) of the braking resistor elements (20) of the stack arrangement (14) are arranged in a space which is delimited on one side and is delimited by a front side (44), onto which the airflow flows, of the at least one fluid guiding element (36).

7. Braking resistor device (10) according to Claim 6,
**characterized in that**
- at least one partition wall (50) is arranged between a rear side (46) of the fluid guiding element (36), which faces away from a front side (44) of the fluid guiding element (36) provided for the fluid guidance, and an electrical connection region (48) of the braking resistor elements (20), and
- an electrical connection region (48) of the braking resistor elements (20) is thermally shieldable by means of the at least one partition wall (50).

8. Braking resistor device (10) according to either of the preceding claims,
**characterized in that**
the dissipation sections (42) of the braking resistor elements (20) of a first layer of the plurality of layers (18) and the dissipation sections (42) of the braking resistor elements (20) of a further layer of the plurality of layers (18) are formed with different lengths.

9. Braking resistor device (10) according to either of the preceding claims,
**characterized in that**
- the stack arrangement (14) is arranged in a housing (52), in particular in a tub-shaped housing which has an opening on one side which extends over at least 80% of a length of one of the dissipation sections (42) of the braking resistor elements (20) of the stack arrangement (14), preferably over an entire length of a longest dissipation section of the dissipation sections (42) of the braking resistor elements (20) of the stack arrangement (14), and
- a maximum stack height of the stack arrangement (14) is less than or equal to a maximum housing height of the housing (52).

10. Braking resistor device (10) according to Claim 9,
**characterized in that**
the dissipation sections (42) of the braking resistor elements (20) of the stack arrangement (14) are arranged exclusively within the housing (52).

11. Vehicle (12) having a vehicle shell (54) and a braking resistor device (10) according to one of the preceding claims which is arranged recessed in a formed recess (56) of the vehicle shell (54) in such a way that an uppermost layer (22) of the plurality of layers (18) of a stack arrangement (14) of the braking resistor device (10) is arranged flush with or below the vehicle shell (54) surrounding the formed recess (56).

12. Method for operating the braking resistor device (10) according to one of Claims 1 to 10, wherein braking resistor elements (20) which are arranged in multiple layers above one another in a stack arrangement (14) are cooled by a travel airflow (38).

## Revendications

1. Dispositif (10) de résistance de freinage pour un véhicule (12) comportant
- plusieurs éléments (20) de résistance de freinage, qui ont chacun une enveloppe (62) tubulaire conductrice de la chaleur ;
- dans lequel un matériau (64) conducteur de la chaleur et isolant électriquement est disposé dans l'enveloppe (62) ;
- dans lequel un conducteur (66) électrique est, sur au moins 50 % d'une étendue en longueur totale de l'enveloppe (62), le long d'une étendue en longueur d'un élément (20) de résistance de freinage lui appartenant, enrobé dans le matériau (64) conducteur de la chaleur et isolant électriquement ;
- dans lequel les plusieurs éléments (20) de résistance de freinage sont disposés en un empilement (14) ayant plusieurs couches (18) ;
- dans lequel les plusieurs couches (18) sont formées chacune d'éléments (20) de résistance de freinage, qui sont disposées sensiblement parallèlement entre elles dans un plan, qui s'étend sensiblement perpendiculairement à la direction (16) d'empilement ;
- dans lequel les éléments (20) de résistance de freinage de diverses couches des plusieurs couches (18) sont alignés les uns par rapport aux autres dans la direction d'empilement,
- dans lequel les éléments (20) de résistance de freinage de l'empilement (14) sont disposés à distance les uns des autres, de manière à ce que l'empilement (14) puisse être traversé par un vent relatif et qu'ainsi le vent relatif puisse passer d'une couche (22) la plus haute de l'empilement (14) à une couche (24) la plus basse de l'empilement (14),
- dans lequel un écartement (26) entre des éléments (20) de résistance de freinage immédiatement voisins d'une première couche des plusieurs couches (18) est au moins deux fois aussi grand, de préférence au moins trois fois aussi grand, qu'un autre écartement (28) entre les éléments (20) de résistance de freinage de la première couche et les éléments (20) de résistance de freinage d'une autre couche directement voisine de la première couche des plusieurs couches (18) ; et
- dans lequel l'empilement (14) est agencé pour être refroidi passivement.

2. Dispositif de résistance de freinage suivant la revendication 1,
**caractérisé en ce que**
l'écartement (26) entre des éléments (20) de résistance de freinage directement voisins d'une couche des plusieurs couches (18) a une valeur d'au moins 1,5 fois d'une étendue la plus grande de l'un des éléments (20) de résistance de freinage immédiatement voisins, mesurée dans un plan s'étendant sensiblement perpendiculairement à la direction (30) d'étendue en longueur de l'élément (20) de résistance de freinage.

3. Dispositif (10) de résistance de freinage suivant l'une des revendications précédentes,
**caractérisé en ce que**
les éléments (20) de résistance de freinage de l'empilement (14) sont mis à distance les uns des autres au moyen de paliers (32) libres, qui ont des surfaces (34) de rebondissement en forme de lignes de courant.

4. Dispositif (10) de résistance de freinage suivant l'une des revendications précédentes,
**caractérisé en ce qu'**
il est prévu au moins un élément (36) de conduite de fluide, au moyen duquel un courant (38) de vent relatif peut être conduit dans l'empilement (14) pour le refroidissement des éléments (20) de résistance de freinage disposés en plusieurs couches.

5. Dispositif (10) de résistance de freinage suivant la revendication 4,
**caractérisé en ce que**
le au moins un élément (36) de conduite de fluide est constitué au moins par endroits sous la forme d'une rampe,
- la rampe est constituée par endroits sous la forme d'un plan en oblique et
- le plan en oblique est incliné d'un angle (40) d'une plage de 10° à 25°, de préférence d'une plage de 19° à 23°, et d'une manière particulièrement préférée, de sensiblement 21° avec une direction (30) d'étendue en longueur des éléments (20) de résistance de freinage de l'empilement (14).

6. Dispositif (10) de résistance de freinage suivant la revendication 4 ou 5,
**caractérisé en ce que**
- les éléments (20) de résistance de freinage de l'empilement (14) traversent respectivement le au moins un élément (36) de conduite de fluide et
- des sections (42) de dissipation des éléments (20) de résistance de freinage de l'empilement (14) sont disposés dans un espace délimité d'un côté, qui est délimité par un côté (44) avant, attaqué par le vent relatif, du au moins un élément (36) de conduite de fluide.

7. Dispositif (10) de résistance de freinage suivant la revendication 6,
**caractérisé en ce qu'**
- au moins une cloison (50) est disposée entre un côté (46) arrière de l'élément (36) de conduite de fluide, qui n'est pas tourné vers un côté (44) avant prévu pour la conduite de fluide de l'élément (36) de conduite de fluide, et une partie (48) de connexion électrique des éléments (20) de résistance de freinage et
- une partie (48) de connexion électrique des éléments (20) de résistance de freinage peut être protégée thermiquement au moyen de la au moins une cloison (50).

8. Dispositif (10) de résistance de freinage suivant l'une des revendications précédentes,
**caractérisé en ce que**
les sections (42) de dissipation des éléments (20) de résistance de freinage d'une première couche des plusieurs couches (18) et les sections (42) de dissipation des éléments (20) de résistance de freinage d'une autre couche des plusieurs couches (18) ont des longueurs différentes.

9. Dispositif (10) de résistance de freinage suivant l'une des revendications précédentes,
**caractérisé en ce que**
- l'empilement (14) est disposé dans une enveloppe (52), en particulier dans une enveloppe en forme de cuvette, qui a d'un côté une ouverture qui s'étend sur au moins 80 % d'une longueur d'une section (42) de dissipation des éléments (20) de résistance de freinage de l'empilement (14), de préférence sur toute la longueur d'une section de dissipation la plus longue des sections (42) de dissipation des éléments (20) de résistance de freinage de l'empilement (14), et
- une hauteur maximum de l'empilement (14) est inférieure ou égale à une hauteur maximum de l'enveloppe (52).

10. Dispositif (10) de résistance de freinage suivant la revendication 9,
**caractérisé en ce que**
les sections (42) de dissipation des éléments (20) de résistance de freinage de l'empilement (14) sont disposées exclusivement dans l'enveloppe (52).

11. Véhicule (12) comprenant une enveloppe (54) de véhicule et comprenant un dispositif (10) de résistance de freinage suivant l'une des revendications précédentes, qui est disposé enfoncé dans un renfoncement (56) de l'enveloppe (54) du véhicule, en ce qu'une couche (22) la plus haute des plusieurs couches (18) d'un empilement (14) du dispositif (10) de résistance de freinage est disposée au ras ou en-dessous de l'enveloppe (54) du véhicule entourant le renfoncement (56).

12. Procédé pour faire fonctionner un dispositif (10) de résistance de freinage suivant l'une des revendications 1 à 10, dans lequel on refroidit, par un courant (38) de vent relatif, des éléments (20) de résistance de freinage montés les uns sur les autres en plusieurs couches en un empilement (14) .
